# EUROPEAN PATENT SPECIFICATION

(11) **EP 3 598 333 B1**
(45) Date of publication and mention of the grant of the patent: **18.01.2023**
(21) Application number: 18183586.9
(22) Date of filing: 16.07.2018
(51) Int. Cl.: G06F 21/57, G06Q 10/10, G06F 21/10, G06F 8/65, H04L 9/40, H04L 9/32, H04L 9/00

(54) **ELECTRONIC DEVICE UPDATE MANAGEMENT**
VERWALTUNG DER AKTUALISIERUNG ELEKTRONISCHER VORRICHTUNGEN
GESTION DE MISE À JOUR DE DISPOSITIF ÉLECTRONIQUE

(43) Date of publication of application: 22.01.2020
(73) Proprietor: Nokia Technologies Oy, 02610 Espoo (FI)
(72) Inventor: OLIVER, Ian Justin, 01150 Söderkulla (FI); LIMONTA MÁRQUEZ, Gabriela Claret, 02230 Espoo (FI); ORMISKANGAS VIGMOSTAD, Borger, 00180 Helsinki (FI); KALLIOLA, Aapo, 00710 Helsinki (FI)
(74) Representative: Laine IP Oy

(56) References cited:
- US-A1- 2004 230 828
- US-A1- 2018 088 928

## Description

### FIELD

Various example embodiments relate to managing updating of electronic devices.

### BACKGROUND

Devices are shipped with a set of firmware and software. After some time, they need to be updated by means of software updates or patches. These updates may occur regularly. They can include firmware, software and application updates. Regular updates keep the devices protected against vulnerabilities in software.

Outdated software may contain vulnerabilities that are exploitable by attackers. Therefore, it is important to keep devices up to date with the latest firmware or software which fixes those vulnerabilities. Any device in a network running an old version of software, or one specifically known to be vulnerable, is a threat to the whole system.

Requirements for device updating are changing. In cloud environments, such as the Telco Cloud, there are machines running the virtual workload, as well as different hardware connected to the cloud, such as base stations. With the increasing amount of Internet of Things (IoT) devices that can be connected to a cloud, it is important to facilitate control over the software running in these devices and the update process.

US2004/230828 discloses a security audit manager manipulating computer profile data to produce various database tables and views and produces computer-group specific security audit reports that summarize the security audit status of computers in respective group.

US2018/088928 addresses update conflict resolution by using a distributed ledger, and actions upon receiving two update requests to a configuration of a computer program.

### SUMMARY

The invention is defined by the features of the independent claims. Some specific embodiments are defined in the dependent claims.

According to a first aspect, there is provided a method, comprising: receiving, by an attestation component, a policy for a device quoted for software state measurements, wherein the policy comprises a set of information indicating rules and/or values for attesting one or more software components, receiving a quote of the device, the quote comprising measurements of one or more software components of the device, verifying compliance of the device with the policy on the basis of the received measurements of the one or more software components, and sending a quote event for the device for an attestation database.

According to a second aspect, there is provided a method, comprising: detecting, by a device for attestation, a trigger for software state measurements, performing measurements of one or more software components in response to the trigger, and sending a quote to an attestation component, the quote comprising measurements of the one or more software components of the device, for verifying compliance of the device with a policy indicating expected software state and comprising a set of information indicating rules and/or values for attesting the one or more software components.

According to a third aspect, there is provided an apparatus, comprising at least one processor and at least one memory including computer program code, the at least one memory and the computer program code being configured to, with the at least one processing core, cause the apparatus at least to: receive a policy for a device quoted for software state measurements, wherein the policy comprises a set of information indicating rules and/or values for attesting one or more software components, receive a quote of the device, the quote comprising measurements of one or more software components of the device, verify compliance of the device with the policy on the basis of the received measurements of the one or more software components, and send a quote event for the device for an attestation database.

According to a fourth aspect, there is provided an apparatus comprising at least one processor and at least one memory including computer program code, the at least one memory and the computer program code being configured to, with the at least one processing core, to cause the apparatus at least to: detect a trigger for software state measurements, perform measurements of one or more software components in response to the trigger, and send a quote to an attestation component, the quote comprising measurements of the one or more software components of the device, for verifying compliance of the device with a policy indicating expected software state and comprising a set of information indicating rules and/or values for attesting the one or more software components.

According to a fifth aspect, there is provided a computer program product, a computer readable medium, or a non-transitory computer readable medium comprising program instructions for causing an apparatus to perform at least the following: receive a policy for a device quoted for software state measurements, wherein the policy comprises a set of information indicating rules and/or values for attesting one or more software components, receive a quote of the device, the quote comprising measurements of one or more software components of the device, verify compliance of the device with the policy on the basis of the received measurements of the one or more software components, and send a quote event for the device for an attestation database.

According to a sixth aspect, there is provided a computer program product, a computer readable medium, or a non-transitory computer readable medium comprising program instructions for causing an apparatus to perform at least the following: detect a trigger for software state measurements, perform measurements of one or more software components in response to the trigger, and send a quote to an attestation component, the quote comprising measurements of the one or more software components of the device, for verifying compliance of the device with a policy indicating expected software state and comprising a set of information indicating rules and/or values for attesting the one or more software components.

An embodiment according to any one of the aspects can comprise triggering an update from a patch system to the device in response to detecting an update to be available for the device, and verifying compliance of the device with the policy on the basis of a subsequent quote after the update to the device.

An embodiment according to any one of the aspects can comprise sending an update event associated with the device for the attestation database in response to performing the update to the device.

In an embodiment according to any one of the aspects, the measurements are hashed in the quote response.

In an embodiment according to any one of the aspects, the attestation database is a distributed ledger and/or the attestation component is provided by an agent of a distributed attestation network. The agent may be a blockchain node, for example.

In an embodiment according to any one of the aspects, the agent is an event listener.

An embodiment according to any one of the aspects can comprise detecting events added in the attestation database indicative of one or more of a policy definition, a policy update, a successful quote, an unsuccessful quote, a device startup, a shutdown, a device reboot, a device update, a device attestation, an update patch release, and an update patch revocation.

An embodiment according to any one of the aspects can comprise reviewing events added in the attestation database after last successful quote in response to non-compliance of the device with the policy, and detecting a need for update and/or an update patch for the device on the basis of the review of events. The events may be detected and/or reviewed by an event listener.

An embodiment according to any one of the aspects can comprise sending a quote request to the device, and receiving the quote in a quote response from the device.

An embodiment according to any one of the aspects can comprise receiving a key for attestation, and verifying a signature in the quote on the basis of the key for attestation.

An embodiment according to any one of the aspects can comprise causing tagging of the device as not-trusted in response to at least one of failing validation of a signature received from the device, one or more values of the received measurements failing to match associated values in the policy, and conflict between additional information in the received quote and device state stored in the attestation database. Thus, an alert may be sent to a system administrator or a software update from a patch system to the device may be triggered in response to detecting non-compliance with the policy and availability of an update for the device.

In an embodiment according to any one of the aspects, the policy and the quote request indicate one or more platform configuration registers to be quoted, and the quote comprises measurements for the platform configuration registers.

In an embodiment according to any one of the aspects, information is obtained or measurements are performed also on hardware and/or configuration data of the device being attested. Information/measurements on the hardware and/or configuration data may be included in the quote and compliance verification may comprise verifying the received information/measurements on the hardware and/or configuration against associated rule(s) and/or values defined by the policy. For example, the quote and/or policy may comprise one or more of measurements or information on firmware, boot code, device microcode, boot records, disk partitions, trusted platform module measurements, configuration strings, operating system components, and kernel(s).

### BRIEF DESCRIPTION OF THE DRAWINGS

Some example embodiments will now be described with reference to the accompanying drawings.
FIGURES 1 an 2 illustrate methods in accordance with at least some embodiments;
FIGURES 3 and 4 illustrate example systems in accordance with at least some embodiments;
FIGURE 5 illustrates introduction of a device in accordance with at least some embodiments;
FIGURES 6 and 7 illustrates methods in accordance with at least some embodiments;
FIGURE 8 illustrates a signalling chart in accordance with at least some embodiments;
FIGURE 9 illustrates attestation functions in accordance with at least some embodiments;
FIGURE 10 illustrates a software update example in accordance with at least some embodiments; and
FIGURE 11 illustrates an apparatus in accordance with at least some embodiments.

### EMBODIMENTS

There is now provided improved control for software updates, to one or more electronic devices, referred below to as (attested) devices or machines, by applying an attestation procedure. The attestation procedure may be at least controlled by at least one attestation component, which may be provided by an agent of a distributed attestation network or an attestation server. The attestation component may be configured to keep track of device software state and maintain device information in a centralized or distributed attestation database. The attestation component may obtain measurements of software component(s) of device(s) it is monitoring and determines if they are trusted or not. It is to be noted that, for conciseness, the term "software" in the present disclosure also covers firmware, and the software update may be a firmware update. The software measurements refer generally to obtaining information of the software state of the attested device, in some embodiments Trusted Platform Module (TPM) measurements. The process of obtaining the software component measurements of a device is referred to as quoting. A quote may comprise or indicate results of the software component measurements, which is for simplicity herein referred to simple as the quote comprising the measurements. The quote may comprise a value or a set of values for one or more components, such as measurements, states or other (supplementary) data. According to the attestation procedure, a device may be quoted to perform measurements on software component(s) in the device and on the basis of received measurements software state of the device and a need for software update may be defined.

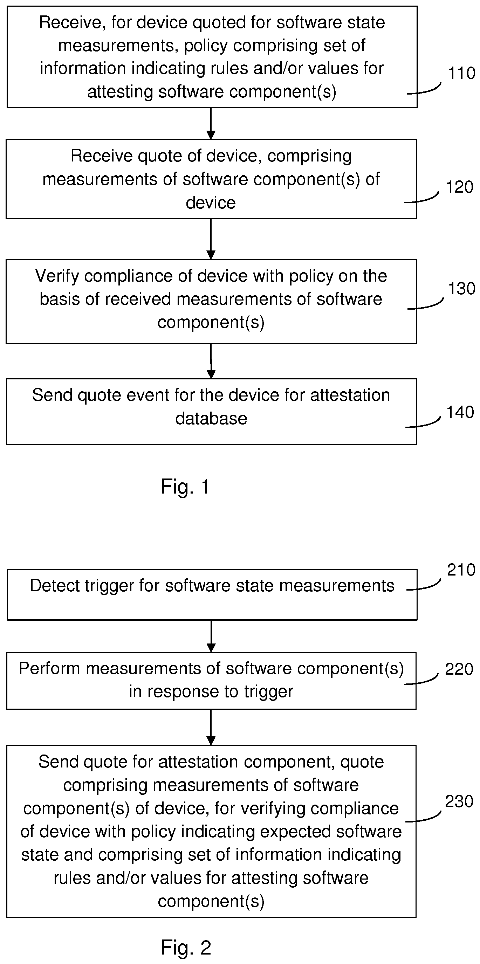

FIGURE 1 illustrates a method according to some embodiments. The method may be applied for software component attestation of one or more (attested) devices which in some embodiments are nodes of a distributed system, and may be carried out by the attestation component. The method may be implemented in a communications apparatus or device, such as a distributed network node or a server, e.g. a network management device, a network operator device, an IT administrator device, or a device management system (DMS) node, for example.

Block 110 comprises receiving a policy for a device quoted for software state measurements. The policy refers generally to information indicating at least expected or required state of software for a single or a set of devices. The policy may comprise a set of information indicating rules and/or values for attesting and verifying compliance of a device. The policy may define expected measurement values (associated with the rules) for a device running a certain software, such as a software version number, etc.

Block 120 comprises receiving a quote of the device, the quote comprising measurements of one or more software components of the device. The measurements reflect the software state or configuration of the machine. The quote may be received directly from the device or via one or more intermediate entities, such as an attestation database.

Block 130 comprises verifying compliance of the device with the policy on the basis of the received measurements of the software component(s). Block 140 comprises sending a quote event for the device for an attestation database. Depending on the embodiment, this may comprise adding the quote event in the database or sending to one or more entities for subsequent storage in the database, e.g. providing a blockchain transaction comprising the quote event for validation and subsequent publication in the blockchain. In some embodiments, the quote event is generated on the basis of the verification 130, to record and indicate the result of the attestation. The quote even may indicate successful or unsuccessful compliance verification. In some embodiments, a quote event comprises the quote, and may be used later to review the software state of the device.

In response to detecting an update to be available for the device, an update from a patch system to the device may be triggered. A check for an update may be carried out in response to the device failing to comply with the policy in block 130. An update event associated with the device may be caused to be added in the attestation database in response to performing the update to the device. The device may (again) be quoted and compliance verified after the update. It is to be noted that the features in blocks 110 and 120 may be carried out in different order depending on the implementation, i.e. the policy may be received for the device for which a quote has already been received or for which the quote will be requested.

FIGURE 2 illustrates a method according to some embodiments. The method may be applied for providing state information of software component(s) of one or more devices being attested, which in some embodiments are nodes of a distributed system. The method may be implemented in an apparatus or device capable of participating in the attestation procedure, such as a user device, a machine-to-machine (M2M) or an IoT device, a network or system management device, a network node, such as a base station, for example.

Block 210 comprises detecting a trigger for quote for software state measurements. The apparatus performing the method of Figure 1 may cause the trigger 200 by request the device to provide the quote 210, or the device may be triggered by another apparatus or an internal trigger.

Block 220 comprises performing measurements of one or more software components in response to the trigger. Block 230 comprises sending a quote to an attestation component, the quote comprising measurements of the software component(s) of the device, for verifying compliance of the device with the policy indicating expected software state. The quote 230 may be received in block 120 by the apparatus implementing the attestation component and verifying the compliance of the device with the policy.

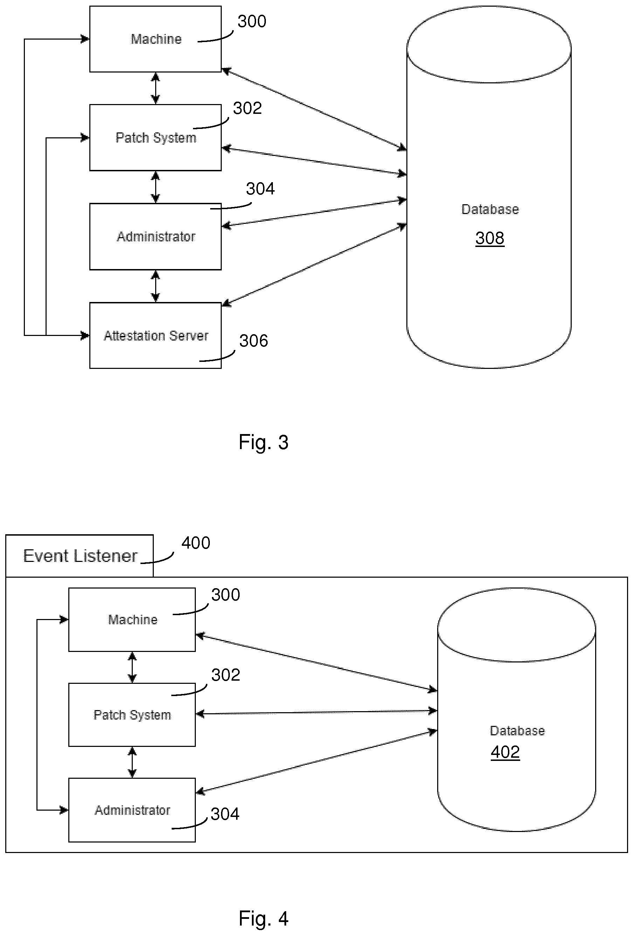

In some embodiments, the attestation procedure is arranged by a centralized architecture by an attestation server. FIGURE 3 illustrates an example of such centralized system comprising the (set of) device(s) or machine(s) 300 to be attested, a software update provision system, herein referred to as a patch system or a patch management component 302, an administrator component 304, an attestation server 306, and an (attestation) database 308. FIGURE 3 illustrates how the entities or components may communicate with each other. In this architecture the attestation is carried out through the attestation server 306, which may be configured to carry out the method illustrated in FIGURE 1. The attestation server may have the responsibility of triggering the software updates on the machines as soon as it detects outdated software. The server may be configured to send a quote request to the device, and receive the quote in a quote response from the device. No event listener is necessary on this kind of architecture.

In some embodiments, the attestation procedure is provided by a distributed system. The attestation database may be a distributed ledger and the attestation procedure is performed by an agent of a distributed attestation network. The purpose of the distributed ledger is to record and enforce verifiable transactions and order of events, in the present embodiments related to the attestation procedure. A distributed ledger can be considered a general database synchronized between many parties, which, at successive time instances, comprises successive states of consensus about a particular matter, e.g., on device quote or update event. Such states may be reached by many parties, e.g., nodes in a peer-to-peer (P2P) network, following a decentralized consensus algorithm. This may provide an agreement between the nodes without assuming trust between them. The distributed ledger enables a decentralized, auditable, and tamper-proof registry of privacy permissions for managing device updates. Attestation related information may be published to the distributed ledger from any location if the publisher is appropriately equipped for the publication, for instance has appropriate keys to sign the submission. There is no single point of failure that an attacker could attack to stop the process.

The distributed network may be a private or public distributed network, and may be built on currently available blockchain system, for example. The nodes may be physical devices connectable locally by at least one a wireless network, such as a Wi-Fi network and/or a cellular network. However, it is to be appreciated that multiple underlying networks and/or different connections may be applied to connect nodes of the distributed network. The nodes in the distributed network may comprise corporate, authority, and/or user devices, such as a server, a desktop/tablet/laptop computer, a smartphone, an IoT device, a domestic appliance, building automation device, an entertainment system device, a vehicle unit, a wearable, or any other suitable electronic device. The system may comprise an administrator or management node, a hub, relay or other kind of intermediate device for connecting a node to further networks or services, such as another distributed or centralized computing system or a cloud service. The nodes are mutually addressable in a suitable way, for example, they may be connectable to an internet protocol, IP, network.

FIGURE 4 illustrates a simplified example of components for such distributed system. The agent of the distributed attestation network may be provided as or by an event listener 400 configured to perform at least some of the attestation procedure, such as the blocks illustrated in connection with FIGURE 1. The event listener 400 may be configured to trigger actions based on the events that occur in the distributed system. For example, the event listener 400 may have the responsibility of triggering software updates when it detects on the basis of the received quote and policy that the quoted device is in an outdated state. By storing the results of attestation into a distributed database 402, such as a blockchain ledger, agents can determine what software is running on each device.

An attestation system may in some embodiments comprise both the attestation server 306 and the event listener 400. Alternatively, the system can be adapted to work with only one of these components. In a situation where the event listener is not implemented, the attestation server can perform at least some of the features of the event listener illustrated below. Similarly, if attestation is done in a distributed manner and a centralized attestation server is not implemented, the event tracking component can carry out verification functionality instead of the attestation server.

The attestation database 308, 402 can be implemented in a centralized manner or in a distributed manner. The centralized or distributed attestation database, 308 or 402, respectively, stores the policies, and may comprise further attestation related information for the attestation system to operate properly. The information stored in the database may comprise at least some of machine identities, policy definitions, global event logs, machine event logs, attestation event logs and patch releases. Examples of events that can be detected and added to the database 308, 402 include (but are not limited to):
- Policy definition
- Policy update
- Successful quote
- Unsuccessful quote
- Device startup
- Device shutdown
- Device reboot
- Device update
- Device attestation
- Patch release
- Patch revocation

The event listener 400 can keep track of one or more of these events and trigger actions based on the events it detects.

For example, a NoSQL database, such as a MongoDB may be applied for centralized implementations. In some embodiments, for a distributed implementation, a blockchain, such as Ethereum-based implementation is applied. If a blockchain is used, we also obtain desirable further properties in the system, such as a tamper-proof record of all events that have occurred in the system. Additionally, it can increase accountability in the system, since we can verify the author of each transaction.

In both centralized and distributed attestation systems, the administrator 304 defines the policy, which may define a set of requirements or policies that the attested device 300 must follow. These policies may comprise a set of expected values for software measurements. The attestation component responsible for the verification, such as the attestation server 306 or the event listener 400, may in block 130 compare measurement values reported by the device against the policy applying for the device. If the device reports values that differ from the expected values, the device can be labelled as outdated and a software update should be triggered. Furthermore, once the software patch is applied, the device will be measured again, and the attestation system can verify that the patch was successfully applied, since the new measurements should satisfy the policy.

The system administrator 304 can communicate with the attestation server 306 to create new policies, update existing policies and/or assign policies to devices. If no attestation server is implemented, the system administrator can communicate directly with the database 308, 402, to perform these actions. Additionally, the system administrator can communicate with the patch system 302 to manage software patches for different devices. The system administrator 304 may be configured to receive security alerts from the attestation component when the attestation was unsuccessful due to a reason different than outdated software. The administrator may be configured to output an alert to a user of the respective device and/or initiate an action to remedy the problems detected by the attestation.

The patch system 302 may be configured to maintain and provide the available updates for devices. The patch system 302 may maintain information or a list of available patches as well as on mapping between target systems and released patches for that system. The patch system can be implemented in different ways, for example as part of device management system (DMS). Some examples of available implementations include but are not limited to: a traditional data store in a centralized manner or a distributed data store. In the distributed data store patches can be added e.g. to a blockchain along with metadata for each patch, and it anyone may be permitted to retrieve updates from the chain.

In some embodiments the (attested) devices 300 are provided with a Trusted Platform Module (TPM). The TPM may be configured to generate a hash that summarizes the hardware and/or software configuration of that platform, as well as other related metadata, such as reboot count. The hash may be sent in the quote 120, 230 and compared in block 130 to an expected hash value, to verify that particular software is running on a device.

A TPM chip can store cryptographic keys, certificates and confidential data. It may store two unique keypairs: an endorsement key (EK) and an attestation key (AK). Additionally, it may comprise a set of platform configuration registers (PCRs) which store measurements, in the form of hashes, of the software components of a device. A TPM can be asked in block 210 to provide the quote for a set of PCRs, wherein the set may be defined by the policy. The quote may be a hash over the stored values of the selected PCRs. The TPM will then return the quote for the requested PCRs, a cryptographic signature of the quote (signed by the AK) and other information, including a timestamp and a reboot count.

If a device has a TPM, the policy or an entry of the policy can define a mapping between a PCR identifier and an expected value. The administrator 304 can define policies for a device to be considered in a trusted state. When attestation is done the measurements are checked against the expected PCR specific values in the policy.

It is to be noted that the expected values in a policy are not limited to PCR values from a TPM. Policies can be defined basically for any kind of measurement that can be taken from the attested device 300. Furthermore, a policy can potentially become quite complex. We can think of simple and compound policies. A simple policy is a set of expected values, whereas a compound policy comprises a set of simple policies. Therefore, very specific policies can be generated as building blocks for more complex policies. For example: if there are two devices running the same BIOS version but different software on top, a simple policy can be defined for the BIOS and then two different policies for the other software on top. Then two (or more) compound policies may be generated, which share the BIOS policy.

Various advantages are available over known software updating systems applying centralized or distributed architectures, such as blockchain-based schemes for distributing software. By applying the presently disclosed attestation procedure, the devices do not need to detect that they need an update or periodically check if their system is up-to-date against a verifier node. The devices do not need to traverse a blockchain to find available updates for their software, but instead an agent can determine, based on the attestation results, which devices need updates. Instead of requiring having a single network node, such as a base station to push software updates to the devices, the present procedure facilitates different policies that, mixed with the attestation results, can be used to automatically determine which device needs an update. Furthermore, obtaining attestation results after applying the patch allows to verify that the device has been updated successfully. Hence, in addition to getting the updates to the target devices, the present embodiments also verify that they have indeed been patched.

Next, the attestation procedure or protocol according to at least some embodiments is illustrated in further detail. The protocol may comprise following stages or main steps: 1) introduction, 2) quoting, and 3) action. The introduction stage may be carried out once when the device starts up, and the quoting and action steps may be repeated.

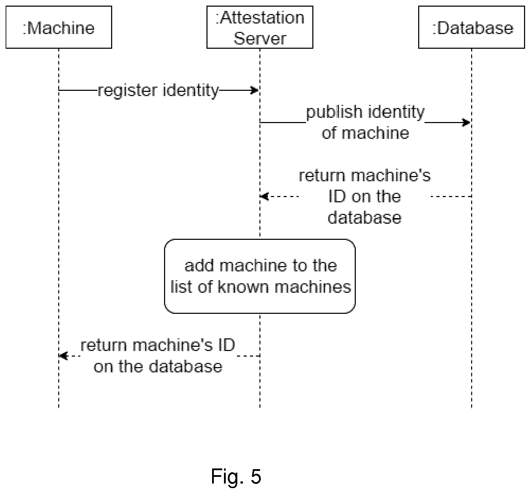

FIGURE 5 illustrates 1) introduction of a device for the attestation procedure. The device 300 first registers its identity to the attestation server 306 to be added to a set of known devices in the network. The identity of a device may comprise device's IP address, TPM's EK, TPM's AK, and/or other relevant metadata, depending on the implementation. For example, such other metadata may comprise Openstack ID, device name, kernel version and/or other system information.

The attestation server 306, upon receiving the request from the device 300 and preferably authenticating the device, may register the device into the attestation database 308. The database may store this device under a global unique ID and return this ID to the attestation server. The attestation server can now add the device to its list of known devices and return the assigned ID to the device. It is to be noted that the ID on the database will depend on the database implementation used. For example, if a Mongo database is used, this would be a BSON Object ID.

In an alternative embodiment in the distributed system, instead of applying the attestation server 306, the device 300 may register directly to the distributed database 402 by generating a transaction which is validated by at least some nodes of the distributed network. Upon validation of the transaction, the device is added to the distributed network. If a blockchain is used, the assigned ID may be an address of a (smart) contract on the chain that comprises the device information. Note that this address is a globally unique identifier, which can serve as the unique identity of the device.

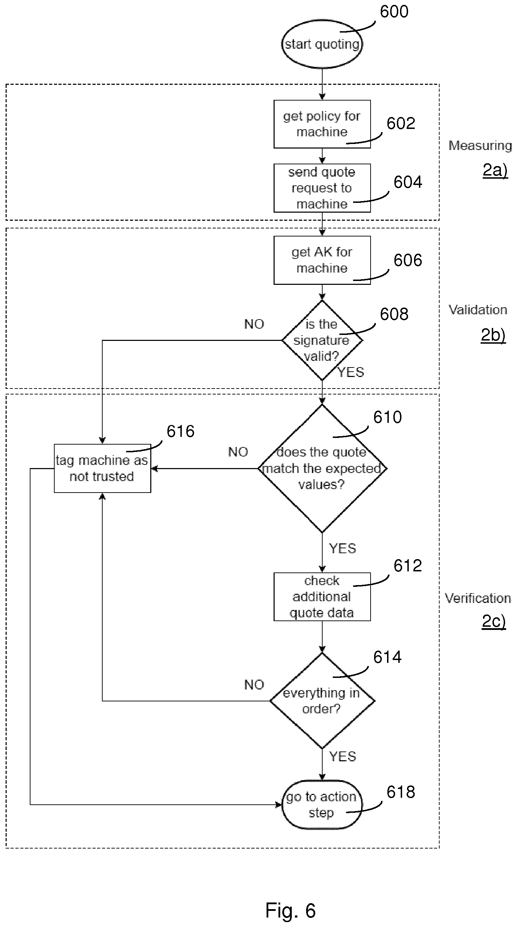

FIGURE 6 illustrates an example method for 2) quoting of a device, such as the device 300. The method may be carried out by an apparatus implementing the method of FIGURE 1, such as an apparatus comprising the attestation server 306 or at least partly by the event listener component. This stage may comprise three steps or sub-stages: measuring 2a), validation 2b), and verification 2c). The measuring step should be carried out first, whereas validation and verification can be done in any order.

In the present examples references are made to attesting a device with a TPM. However, as already indicated, the attestation procedure may be applied for any device capable of providing measurements that can be used for verifying 130 compliance in a policy, as disclosed in connection with FIGURES 1 and 2.

For example, the quoting process can be triggered 210, 600 by at least one of: the device triggering quoting in a periodic manner or after an important event (e.g. a reboot), another device in the system can ask the device to quote itself, and the attestation server 306 requesting the device to quote itself. When the quoting process is triggered by an external party, the quoting process can be preceded by an authentication step. The attested device can request the external party to authenticate itself and vice versa. This authentication can be done by using certificates. If certificates are used, the rest of the communications for the quoting process can be secured.

Next, the sub-stages of the quoting stage 2) are explained:
(2a) Measuring: the policy that the device should satisfy is obtained 602. This policy may comprise a set of PCRs and expected values. In the present example, a quote request is sent 604 to the device. This quote request may indicate the PCRs for which a quote is requested. The device returns the quote for those PCRs, a signature for the quote and other related metadata. The quote may be stored by adding a quote event to the database 308, 402.
(2b) Validation: the AK or another applied cryptographic key, such as a key derived from, sealed by or wrapped by the AK, is obtained 606 from the database 308, 402 and the validity of the cryptographic signature is verified 608. This may comprise verifying that the quote was signed with an AK of the device's TPM. In an alternative embodiment, the TPM of the device can store an externally provided key, which has the device's AK in the signature chain. This externally provided key can be used to sign quotes. This sub-stage is optional. If the signature is valid, the verification sub-stage 2c is entered. If the signature is not valid, the device is tagged as not trusted, and the action stage 3) is entered 618.
(2c) Verification: the attestation server compares 610 the quote to the expected values of the policy. If the quote matches the expected values, check(s) are performed 612, 614 based on the additional information in the quote. For example, block 612 may comprise checking if the device has been rebooted, but it will be appreciated that various other and more complex check routines may be applied.

If there is any information in the quote predefined to cause suspicion, a security alert may be generated for the administrator and the device may be tagged 616 as not trusted. For example, the device may be tagged as untrusted if the reboot count has increased and the device has no reboot events. If everything is in order on the basis of the check 612, 614, the Action step 3) is entered 618.

If the quote does not match the expected values, the device is tagged 616 as not trusted and the action stage 3) is entered 618.

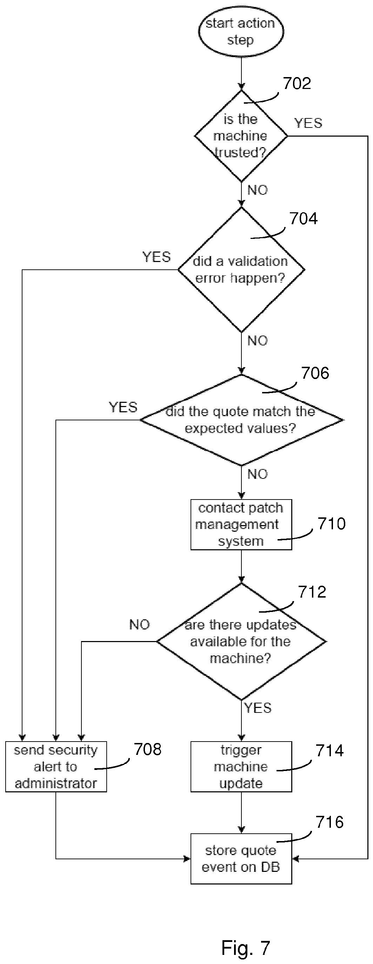

FIGURE 7 illustrates an example method for the Action stage 3) for the attestation procedure. The method may be carried out by an apparatus implementing the method of FIGURE 1, such as an apparatus comprising the attestation server 306 or the event listener component. The actions are based on the results 702, 704, 706 from the previous step 2) on the attestation protocol, the apparatus will decide which actions to take and may first check 702 if the device is tagged as trusted.

If the device is not trusted due to a validation error in block 704, an alert may be sent 708 to the administrator 304. The device is thus maintained as in a not trusted condition, which may cause that no more workload is run on that device until it is back to a trusted state. For example, the validation error from checking the TPM quote may comprise one or more of: attested part of the quote is incorrect, incorrect magic value, and incorrect firmware value.

If the device is not trusted due to the quote not matching 706 the expected values, the patch management system is contacted 710 to check 712 if there is an update available for that device. If there is an update available, the attestation server triggers 714 the device update and the device stays in an untrusted state until it has been updated and successfully re-quoted.

If there is no update available for that device, the procedure assumes the software in the device is incorrect, so it keeps the device in an untrusted state and generates a security alert for the administrator to manually take actions. If the device is trusted, no alerts are raised and no updates are triggered.

In all cases, a quote event may be stored 716 for this device in the database. This event may indicate the result of the attestation. The actions during the stage 3) may be dependent on if the failure is over a period in time or just between two quotes.

As mentioned before, the attestation functionality can be distributed among the different devices in the network, whereby the attestation server 306 is not required. In this embodiment, a device of a distributed network can request another device of the distributed network to measure itself. The attested device may thus send the quote for the attestation component in block 230 first for publication in a distributed database, which in this embodiment may act as an intermediate storage. The attestation component may receive the quote of the device in block 120 from the distributed database. Thus, the method of FIGURE 1 and further the validation 2b) and verification 2c) of the attestation protocol may be carried out by the event listener component 400 operating as the attestation component.

In some embodiments, as already indicated, the attestation database 402 is a blockchain-based database (or blockchain ledger) and at least some of the features of the attestation procedure are performed between blockchain nodes by applying blockchain transactions.

Each blockchain node may have their own copy of the ledger which is in some embodiments permission-controlled, so participants see only appropriate transactions. Information provided in a blockchain transaction, such as the presently disclosed attestation related events, may be stored in the blockchain ledger in response to validation of the respective blockchain transaction. A node establishing the next block may be known as a miner node. A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. Once a miner discovers the proof-of-work, it can publish the block, which other nodes of the system will then add to the blockchain as the new most recent established block with proof of work code field. In case the miner node discovers a proof-of-work based on an incomplete set of transactions, for example if some transactions did not reach the miner node, other nodes in the network will not accept the block into the blockchain, and it will be excluded from a consensus version of the blockchain in the system.

Although discussed above in terms of proof-of-work, in some embodiments a proof-of-stake may be used instead of, or additionally to, a proof-of-work. In a proof-of-stake based system, a new block may be accepted once a predetermined fraction of resources are proven as owned by nodes ready to accept the new block version.

The event listener component 400 may be an agent implemented in a blockchain network node and is configured to traverse blockchain events and trigger actions based on the events in the system. Attestation related events, such as the events indicated above, are stored to the blockchain to make them available for the event listener 400. In particular, the event listener 400 may be configured to detect and trigger actions on the basis of events provided by the attested devices 300, the administrator component(s) 304, and the patch system(s) 302, which may be implemented in apparatuses operating as blockchain full or light nodes.

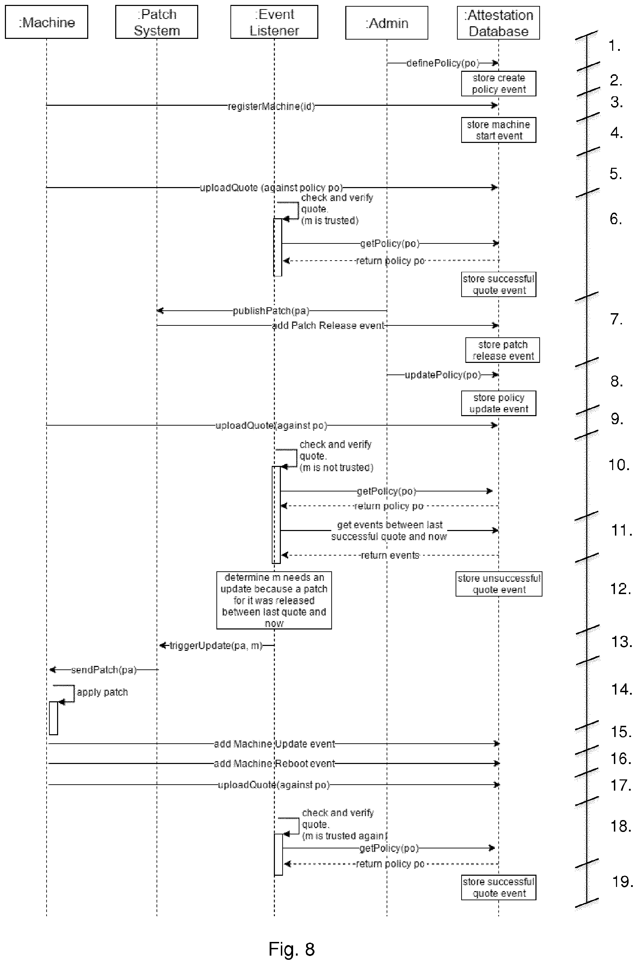

FIGURE 8 shows an example message sequence chart in which attestation results trigger an update on a device, in this example machine m. In this example the attestation is distributed, e.g. performed in a blockchain-based system, and the system comprises the event listener 400.

The messages in the flowchart are as follows:
1. The administrator defines a new policy po with a set of expected values.
2. A policy creation event is provided for the attestation database, such as the blockchain, as a global event.
3. The machine m starts up and provides its identity id to the attestation database.
4. A machine start event is provided for the attestation database.
5. A quote is triggered in the machine m (e.g. by another device requesting a quote or a periodic quote), and the machine m provides the quote for publication on the attestation database.
6. The event listener checks the published quote against the policy po in the attestation database. The quote now satisfies the policy, whereby a successful quote event is provided to the attestation database.
7. The administrator publishes a patch pa applying for machine m, and a patch release event is provided for the attestation database.
8. The administrator updates the existing policy for m with new expected values, and a policy update event is provided for the attestation database.
9. The event listener triggers the quoting process on all devices that follow the policy po. The machine m quotes itself and provides the quote to the attestation database.
10. The event listener checks the quote. This time, the quote does not match the expected values of the policy.
11. The event listener requests all the events between last successful quote and the current time.
12. On the basis of the list of events, the event listener detects that there was a software patch released for the machine m between last successful quote and the current time. The event listener provides an unsuccessful quote event to the attestation database.
13. The event listener communicates with the patch system to trigger an update for machine m.
14. The patch management system sends the update to m and the update is applied.
15. A machine update event is provided for the attestation database.
16. A machine reboot event is provided for the attestation database.
17. The machine quotes itself again because of the reboot.
18. The event listener checks the quote against the policy. The quote now satisfies the updated policy.
19. The event listener provides a successful quote event to the attestation database.

It is to be appreciated that at least some of the features illustrated in connection with FIGURE 8 bundling together a plurality of embodiments for conciseness. For example, one or more of the quote and/or policy related actions may be applied outside the disclosed example and other features of FIGURE 8 and modified in various ways. For example, it is to be noted that the quotes and/or events to be reviewed (11-12.) after failed verification do not have to be past and current time, but can be reviewed over any desired period of time, such as over two set times in the past. Typically the latest and preceding quote(s) are reviewed but it is to be appreciated that basically any quotes may be selected for review, e.g. for historical or forensic reasons.

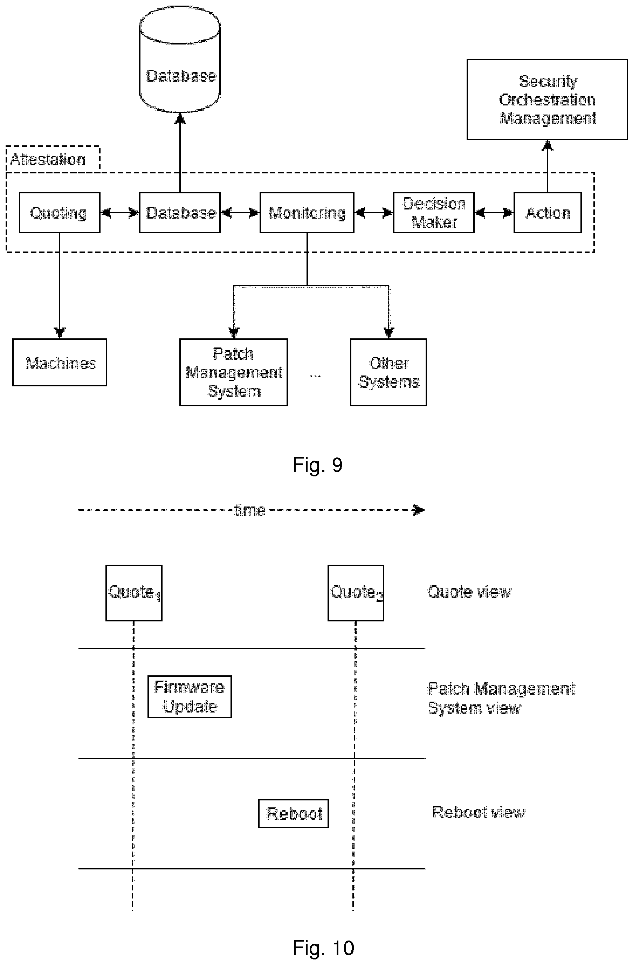

The attestation process can be divided into different functionalities that can be implemented separately. FIGURE 9 shows an example of how the attestation responsibilities can be divided into independent components or functions that communicate with each other, as well as with the other components (previously described) in the system.

The illustrated functions comprise:
- Quoting: Provides a communication interface to obtain 120, 604 quotes from attested devices 300.
- Database: Provides a communication interface to the database 308, 402 and is applied to retrieve 110, 602 information for attestation.
- Monitoring: Provides a communication interface to interact with different systems and obtain information relevant for the attestation process, such as patch update information from the Patch Management System, e.g. the system 302.
- Decision maker: Makes decisions on what actions to take based on the information provided by the other components, and may perform at least some of the features in stages 2b), 2c), and 3. This component may decide whether a device is trusted or not and can trigger updates on outdated devices.
- Action: Takes instructions from the decision maker on what actions to do on the system depending on the attestation results. It can also communicate with an external security orchestration management component to perform actions in the system, to generate 708 security alerts for administrators, for example.

It is to be noted that two or more entities or components illustrated in above Figures may be implemented in a single apparatus. For example, the administrator component 304 and the attestation server 306 and/or the event listener 400 may be implemented in a single apparatus. In the case of distributed architecture, as already indicated, a device 300 being attested may comprise the event listener 400 and at least some of the distributed database 402.

FIGURE 10 illustrates a simplified firmware update example for an attested device, showing a timeline of events from different points of view in the system. The device gets quoted twice. In the time between the first quote Quote₁ and the second quote Quote₁, the patch management system view indicates that the firmware of the device was updated. Also, the reboot event view indicates that a reboot has happened.

The attestation component, such as the attestation server 306 or the event listener 400, can be configured to compare the two quotes to verify that the changes that happened in the system are reflected in measurement changes. When comparing quote₁ and quote₂, the attestation component may detect that the reported measurements have changed. The information quoted by a TPM may include fields that can help with the verification process, such as a reboot count. The difference between the reboot count in Quote₁ and Quote₂ should equal the amount of reboot events visible for that device between Quote₁ and Quote₂. In this case, reboot count of the Quote₂ quote₂.rebootCount - reboot count of the Quote₁ quote₁.rebootCount should equal 1, since there is only one reboot event. If this is not the case, the attestation component can report this to the administrator, since it might indicate strange behaviour. Additionally, the attestation component can check that the update and reboot events happened in the correct order. Policies may be defined that indicate what should happen after an update. For example, if there is a firmware update, the device is updated and rebooted once. These policies would define rules that can be added to the attestation verification process.

In some embodiments, at least some of the above illustrated features are applied for managing software configuration of network nodes or functions, such as radio and/or core network elements. Some examples of such network nodes or functions include base stations, node Bs, core network user plane network functions (e.g. 5G User Plane Function UPF), and control plane functions (e.g. 5G Access and Mobility Management Function AMF and Session Management Function SMF).

It is to be noted that at least some of the above illustrated features may be applied in systems applying network virtualization. Hence, network functions or nodes illustrated above may be shared between two physically separate devices forming one operational entity. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer. External network virtualization is targeted to optimized network sharing. Another category is internal virtual networking which provides network-like functionality to software containers on a single system. For example, instances of 5G network functions can be instantiated as virtual functions in a network function virtualization (NFV) architecture.

An electronic device comprising electronic circuitries may be an apparatus for realizing at least some embodiments. The apparatus may be or may be comprised in a computer, a laptop, a tablet computer, a cellular phone, a machine to machine (M2M) device, a wearable device, a base station, access point device, a network management or control device, a server, or any other apparatus provided with communication capability. In some embodiments, the apparatus carrying out at least some of the above-described functionalities is comprised in such a device, e.g. the apparatus may comprise circuitry, such as a chip, a chipset, a microcontroller, or a combination of circuitries for or in any one of the above-described devices.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

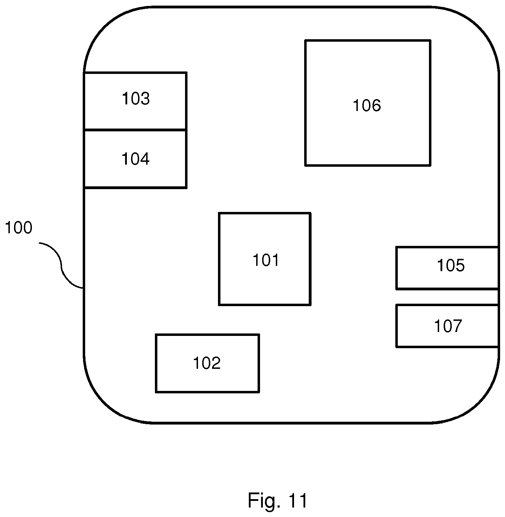

FIGURE 11 illustrates an example apparatus capable of supporting at least some embodiments. Illustrated is a device 100, which may comprise a communications device, in some embodiments arranged to operate as a node in a blockchain-based system. The device may be arranged to carry out the method of FIGURE 1 and the attestation server and/or event listener, or in some embodiments perform the method of FIGURE 2 and operate as the device being attested, and carry out at least some of the embodiments illustrated in connection with FIGURES 1 to 10. The device may include one or more controllers configured to carry out operations in accordance with at least some of the embodiments illustrated above.

Comprised in the device 100 is a processor 101, which may comprise, for example, a single- or multi-core processor wherein a single-core processor comprises one processing core and a multi-core processor comprises more than one processing core. The processor 101 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by executing computer instructions, to perform action to perform at least some of the presently disclosed attestation related features.

The device 100 may comprise memory 102. The memory may comprise random-access memory and/or permanent memory. The memory may comprise at least one RAM chip. The memory may comprise solid-state, magnetic, optical and/or holographic memory, for example. The memory may be at least in part accessible to the processor 101. The memory may be at least in part comprised in the processor 101. The memory 102 may be means for storing information. The memory may comprise computer program code comprising computer instructions that the processor is configured to execute. The memory, processor and computer program code may thus be configured to cause the device 100 to perform at least some of the presently disclosed features. The memory may be at least in part comprised in the processor. The memory may be at least in part external to the device 100 but accessible to the device. For example, control parameters affecting operations related to causing above-illustrated attestation related events and related information may be stored in one or more portions of the memory and used to control operation of the apparatus.

Further, the memory may comprise device-specific cryptographic information, such as secret and public key of the device 100. The transactions may be signed with a private key associated with the respective device or user. The apparatus may be provided with a public-private key pair at manufacture. The private key may be stored on the certifying device's secured memory portion, such that it cannot be tampered with and the private key cannot be stolen. Moreover, the secured portion may also hold the hashing and signing logic.

The device 100 may comprise a transmitter 103. The device may comprise a receiver 104. The transmitter and the receiver may be configured to transmit and receive, respectively, information in accordance with at least one wired or wireless, cellular or noncellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, 5G or other cellular communications systems, wireless local area network, WLAN, and/or Ethernet standards, for example. The device 100 may comprise a short range communication, SRC, transceiver 105. The SRC transceiver may support at least one SRC technology, such as SRC, Bluetooth, Bluetooth Low Energy, or similar technologies. The cellular, other wide network technologies and short range communications may interact in the device in parallel or any other way.

The device 100 may comprise user interface, UI, 106. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 102 or on a cloud accessible via the transmitter 103 and the receiver 104, or via the SRC transceiver 105, and/or to play games.

The device 100 may comprise or be arranged to accept a user identity module or other type of memory module 107. The user identity module may comprise, for example, a subscriber identity module, SIM, and/or a personal identification IC card installable in the device 100. The user identity module 107 may comprise information identifying a subscription of a user of device 100. The user identity module 107 may comprise cryptographic information usable to verify the identity of a user of device 100 and/or to facilitate encryption and decryption of communication effected via the device 100, such as private and/or public keys for creating and validating cryptographic signatures.

The processor 101 may be furnished with a transmitter arranged to output information from the processor, via electrical leads internal to the device 100, to other devices comprised in the device. Such a transmitter may comprise a serial bus transmitter arranged to, for example, output information via at least one electrical lead to memory 102 for storage therein. Alternatively to a serial bus, the transmitter may comprise a parallel bus transmitter. Likewise the processor may comprise a receiver arranged to receive information in the processor, via electrical leads internal to the device 100, from other devices comprised in the device 100. Such a receiver may comprise a serial bus receiver arranged to, for example, receive information via at least one electrical lead from the receiver 104 for processing in the processor. Alternatively to a serial bus, the receiver may comprise a parallel bus receiver.

The device 100 may comprise further devices not illustrated in Figure 11. For example, the device may comprise at least one digital camera or other user media recording device. Some devices may comprise a back-facing camera and a front-facing camera. The device may comprise a fingerprint sensor arranged to authenticate, at least in part, a user of the device. In some embodiments, the device lacks at least one device described above. For example, some devices may lack the SRC transceiver 105 and/or the user identity module 107.

The processor 101, the memory 102, the transmitter 103, the receiver 104, the SRC transceiver 105, the UI 106 and/or the user identity module 107 may be interconnected by electrical leads internal to the device 100 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected.

It is to be understood that the application of the disclosed embodiments are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 2 to 6 may be taken in isolation or further combined together.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

Furthermore, the described features, structures, or characteristics may be combined in any suitable manner in one or more embodiments. In the preceding description, various operational and structural specific details are provided, to provide a thorough understanding of the embodiments. One skilled in the relevant art will recognize, however, that various embodiments can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments find industrial application in communications.

### ACRONYMS LIST

- AK: Attestation key
- AMF: Access and mobility management function
- ASIC: Application-specific integrated circuit
- BSON: Binary JSON
- DMS: Device management system
- EK: Endorsement key
- FPGA: Field-programmable gate array
- GSM: Global system for mobile communication
- IC: Integrated circuit
- IoT: Internet of things
- LTE: Long term evolution
- M2M: Machine to machine
- NB-IoT: Narrowband IoT
- NFV: Network function virtualization
- PCR: Platform configuration register
- PoS: Proof-of-stake
- PoW: Proof-of-work
- SDN: Software defined network
- SMF: Session management function
- SRC: Short range communication
- TPM: Trusted platform module
- UI: User interface
- UPF: User plane function
- WCDMA: Wideband code division multiple access
- WLAN: Wireless local area network

## Claims

1. An apparatus comprising means for performing, by an agent of a distributed attestation network:
- receiving (110) a policy for a device (300), wherein the policy comprises a set of information indicating rules and/or values for attesting one or more software components,
- receiving (120) a quote from the device, the quote comprising measurements of one or more software components of the device,
- verifying (130) compliance of the device with the policy on the basis of the received measurements of the one or more software components,
- generating a quote event for the device on the basis of the verifying the compliance of the device with the policy, and
- causing storage of (140) the quote event to a distributed ledger (402), **characterized in that**:
the agent is an event listener (400) configured to at least detect events added in the distributed ledger indicative of one or more of a policy definition, a policy update, a successful quote, and an unsuccessful quote, and trigger actions based on the detected events.

2. The apparatus of claim 1, wherein the means are further configured to perform:
- in response to detecting an update to be available for the device, triggering (714) an update from a patch system (302) to the device, and
- verifying compliance of the device with the policy on the basis of a subsequent quote after the update to the device.

3. The apparatus of claim 1, wherein the event listener (400) is further configured to detect events added in the distributed ledger indicative of one or more of a device startup, a shutdown, a device reboot, a device update, a device attestation, an update patch release, and an update patch revocation.

4. The apparatus of claim 1, wherein the event listener (400) is configured to
- review events added in the distributed ledger (402) after last successful quote in response to non-compliance of the device with the policy, and
- detect a need for update and/or an update patch for the device on the basis of the review of events.

5. The apparatus of any one of claims 1 to 4, wherein the distributed ledger is a blockchain ledger.

6. The apparatus of any one of claims 1 to 4, wherein the agent is configured to:
- send a quote request to the device, and
- receive the quote in a quote response from the device.

7. The apparatus of any preceding claim, wherein the means are further configured to perform:
- receiving (606) a key for attestation, and
- verifying (608) a signature in the quote on the basis of the key for attestation.

8. The apparatus of any preceding claim, the means are further configured to perform:
- causing tagging (616) of the device as not-trusted in response to at least one of failing validation of a signature received from the device, one or more values of the received measurements failing to match associated values in the policy, and conflict between additional information in the received quote and device state stored in the distributed ledger, and
- causing (708) an alert to a system administrator, or
- triggering (714) a software update from a patch system to the device in response to detecting non-compliance with the policy and availability of an update for the device.

9. The apparatus of any preceding claim, wherein the policy and the quote request indicate one or more platform configuration registers, and
the quote comprises measurements for the platform configuration registers.

10. A system, comprising the apparatus of claim 1 and the device (300), wherein the device (300) comprises means for performing:
- detecting (210) a trigger for software state measurements,
- performing (220) measurements of one or more software components of the apparatus in response to the trigger, and
- sending (230) the quote to the agent.

11. A method for an agent of a distributed attestation network, comprising:
- receiving (110), by an attestation component provided by the agent, a policy for a device (300), wherein the policy comprises a set of information indicating rules and/or values for attesting one or more software components,
- receiving (120) a quote from the device, the quote comprising measurements of one or more software components of the device,
- verifying (130) compliance of the device with the policy on the basis of the received measurements of the one or more software components,
- generating a quote event for the device on the basis of the verifying the compliance of the device with the policy, and
- causing storage of (140) the quote event to a distributed ledger (402), wherein the agent is an event listener configured to at least detect events added in the distributed ledger indicative of one or more of a policy definition, a policy update, a successful quote, and an unsuccessful quote, and trigger actions based on the detected events.

12. The method of claim 11, further comprising:
- in response to detecting an update to be available for the device, triggering (714) an update from a patch system (302) to the device, and
- verifying compliance of the device with the policy on the basis of a subsequent quote after the update to the device.

13. The method of claim 11 or 12, further comprising:
- reviewing events added in the distributed ledger (402) after last successful quote in response to non-compliance of the device with the policy, and
- detecting a need for update and/or an update patch for the device on the basis of the review of events.

14. The method of claim 11 to 13, further comprising:
- causing tagging (616) of the device as not-trusted in response to at least one of failing validation of a signature received from the device, one or more values of the received measurements failing to match associated values in the policy, and conflict between additional information in the received quote and device state stored in the distributed ledger, and
- causing (708) an alert to a system administrator, or
- triggering (714) a software update from a patch system to the device in response to detecting non-compliance with the policy and availability of an update for the device.

15. A computer program, comprising instructions for causing an apparatus (100) to perform the method of any preceding claim 11 to 14.

## Patentansprüche

1. Einrichtung, die Mittel zum Durchführen von Folgendem durch einen Agenten eines verteilten Attestierungsnetzwerks umfasst:
- Empfangen (110) einer Richtlinie für eine Vorrichtung (300), wobei die Richtlinie einen Satz von Informationen umfasst, die Regeln und/oder Werte zum Attestieren von einer oder mehreren Softwarekomponenten anzeigen,
- Empfangen (120) einer Quote von der Vorrichtung, wobei die Quote Messungen von einer oder mehreren Softwarekomponenten der Vorrichtung umfasst,
- Verifizieren (130) der Konformität der Vorrichtung mit der Richtlinie auf Basis der empfangenen Messungen der einen oder der mehreren Softwarekomponenten,
- Erzeugen eines Quotenereignisses für die Vorrichtung auf Basis des Verifizierens der Konformität der Vorrichtung mit der Richtlinie, und
- Bewirken der Speicherung (140) des Quotenereignisses in einem verteilten Ledger (402),
**dadurch gekennzeichnet, dass**:
der Agent ein Ereignisüberprüfer (400) ist, der dazu ausgelegt ist, mindestens Ereignisse zu detektieren, die zum verteilten Ledger hinzugefügt werden und eines oder mehreres von einer Richtliniendefinition, einer Richtlinienaktualisierung, einer erfolgreichen Quote und einer nicht erfolgreichen Quote anzeigen, und auf Basis der detektierten Ereignisse Aktionen auszulösen.

2. Einrichtung nach Anspruch 1, wobei die Mittel ferner zu Folgendem ausgelegt sind:
- Auslösen (714) einer Aktualisierung der Vorrichtung von einem Patchsystem (302) in Reaktion auf das Detektieren, dass eine Aktualisierung für die Vorrichtung verfügbar ist, und
- Verifizieren der Konformität der Vorrichtung mit der Richtlinie auf Basis einer nachfolgenden Quote nach der Aktualisierung der Vorrichtung.

3. Einrichtung nach Anspruch 1, wobei der Ereignisüberprüfer (400) ferner dazu ausgelegt ist, Ereignisse zu detektieren, die zum verteilten Ledger hinzugefügt werden und eines oder mehreres von einem Starten der Vorrichtung, einem Herunterfahren, einem erneuten Hochfahren der Vorrichtung, einer Aktualisierung der Vorrichtung, einer Attestierung der Vorrichtung, einem Patchrelease für die Aktualisierung und einem Patchwiderruf für die Aktualisierung anzeigen.

4. Einrichtung nach Anspruch 1, wobei der Ereignisüberprüfer (400) zu Folgendem ausgelegt ist
- Prüfen von Ereignissen, die nach der letzten erfolgreichen Quote zum verteilten Ledger (402) hinzugefügt wurden, in Reaktion auf die fehlende Konformität der Vorrichtung mit der Richtlinie, und
- Detektieren einer Notwendigkeit der Aktualisierung und/oder eines Aktualisierungspatches für die Vorrichtung auf Basis der Prüfung von Ereignissen.

5. Einrichtung nach einem der Ansprüche 1 bis 4, wobei der verteilte Ledger ein Blockkettenledger ist.

6. Einrichtung nach einem der Ansprüche 1 bis 4, wobei der Agent zu Folgendem ausgelegt ist:
- Senden einer Quotenanforderung an die Vorrichtung, und
- Empfangen der Quote in einer Quotenantwort von der Vorrichtung.

7. Einrichtung nach einem der vorhergehenden Ansprüche, wobei die Mittel ferner zu Folgendem ausgelegt sind:
- Empfangen (606) eines Schlüssels für die Attestierung, und
- Verifizieren (608) einer Signatur in der Quote auf Basis des Schlüssels für die Attestierung.

8. Einrichtung nach einem der vorhergehenden Ansprüche, wobei die Mittel ferner zu Folgendem ausgelegt sind:
- Bewirken des Markierens (616) der Vorrichtung als nicht vertrauenswürdig in Reaktion auf mindestens eines von einer fehlgeschlagenen Validierung einer Signatur, die von der Vorrichtung empfangen wird, der fehlenden Übereinstimmung von einem oder mehreren Werten der empfangenen Messungen mit zugehörigen Werten in der Richtlinie und einem Konflikt zwischen zusätzlichen Informationen in der empfangenen Quote und einem im verteilten Ledger gespeicherten Vorrichtungsstatus, und
- Bewirken (708) einer Warnung an einen Systemadministrator, oder
- Auslösen (714) einer Softwareaktualisierung der Vorrichtung von einem Patchsystem in Reaktion auf das Detektieren der fehlenden Konformität mit der Richtlinie und einer Verfügbarkeit einer Aktualisierung für die Vorrichtung.

9. Vorrichtung nach einem der vorhergehenden Ansprüche, wobei die Richtlinie und die Quotenanforderung ein oder mehrere Plattformauslegungsregister anzeigen, und
die Quote umfasst Messungen für die Plattformauslegungsregister.

10. System, das die Einrichtung nach Anspruch 1 und die Vorrichtung (300) umfasst, wobei die Vorrichtung (300) Mittel zum Durchführen von Folgendem umfasst:
- Detektieren (210) eines Auslösers für Softwarestatusmessungen,
- Durchführen (220) von Messungen an einer oder mehreren Softwarekomponenten der Einrichtung in Reaktion auf den Auslöser, und
- Senden (230) der Quote an den Agenten.

11. Verfahren für einen Agenten eines verteilten Attestierungsnetzwerks, das Folgendes umfasst:
- Empfangen (110) einer Richtlinie für eine Vorrichtung (300) durch eine vom Agenten bereitgestellte Attestierungskomponente, wobei die Richtlinie einen Satz von Informationen umfasst, die Regeln und/oder Werte zum Attestieren von einer oder mehreren Softwarekomponenten anzeigen,
- Empfangen (120) einer Quote von der Vorrichtung, wobei die Quote Messungen von einer oder mehreren Softwarekomponenten der Vorrichtung umfasst,
- Verifizieren (130) der Konformität der Vorrichtung mit der Richtlinie auf Basis der empfangenen Messungen der einen oder der mehreren Softwarekomponenten,
- Erzeugen eines Quotenereignisses für die Vorrichtung auf Basis des Verifizierens der Konformität der Vorrichtung mit der Richtlinie, und
- Bewirken der Speicherung (140) des Quotenereignisses in einem verteilten Ledger (402), wobei der Agent ein Ereignisüberprüfer ist, der dazu ausgelegt ist, mindestens Ereignisse zu detektieren, die zum verteilten Ledger hinzugefügt werden und eines oder mehreres von einer Richtliniendefinition, einer Richtlinienaktualisierung, einer erfolgreichen Quote und einer nicht erfolgreichen Quote anzeigen, und auf Basis der detektierten Ereignisse Aktionen auszulösen.

12. Verfahren nach Anspruch 11, das ferner Folgendes umfasst:
- Auslösen (714) einer Aktualisierung der Vorrichtung von einem Patchsystem (302) in Reaktion auf das Detektieren, dass eine Aktualisierung für die Vorrichtung verfügbar ist, und
- Verifizieren der Konformität der Vorrichtung mit der Richtlinie auf Basis einer nachfolgenden Quote nach der Aktualisierung der Vorrichtung.

13. Verfahren nach Anspruch 11 oder 12, das ferner Folgendes umfasst:
- Prüfen von Ereignissen, die nach der letzten erfolgreichen Quote zum verteilten Ledger (402) hinzugefügt wurden, in Reaktion auf die fehlende Konformität der Vorrichtung mit der Richtlinie, und
- Detektieren einer Notwendigkeit der Aktualisierung und/oder eines Aktualisierungspatches für die Vorrichtung auf Basis der Prüfung von Ereignissen.

14. Verfahren nach Anspruch 11 bis 13, das ferner Folgendes umfasst:
- Bewirken des Markierens (616) der Vorrichtung als nicht vertrauenswürdig in Reaktion auf mindestens eines von einer fehlgeschlagenen Validierung einer Signatur, die von der Vorrichtung empfangen wird, der fehlenden Übereinstimmung von einem oder mehreren Werten der empfangenen Messungen mit zugehörigen Werten in der Richtlinie und einem Konflikt zwischen zusätzlichen Informationen in der empfangenen Quote und einem im verteilten Ledger gespeicherten Vorrichtungsstatus, und
- Bewirken (708) einer Warnung an einen Systemadministrator, oder
- Auslösen (714) einer Softwareaktualisierung der Vorrichtung von einem Patchsystem in Reaktion auf das Detektieren der fehlenden Konformität mit der Richtlinie und einer Verfügbarkeit einer Aktualisierung für die Vorrichtung.

15. Computerprogramm, das Anweisungen zum Bewirken, dass eine Einrichtung (100) das Verfahren nach einem der vorhergehenden Ansprüche 11 bis 14 durchführt, umfasst.

## Revendications

1. Appareil comprenant des moyens pour réaliser, par un agent d'un réseau d'attestation distribué :
- la réception (110) d'une politique pour un dispositif (300), dans lequel la politique comprend un jeu d'informations indiquant des règles et/ou des valeurs pour attester un ou plusieurs composants logiciels,
- la réception (120) d'un devis du dispositif, le devis comprenant des mesures d'un ou plusieurs composants logiciels du dispositif,
- la vérification (130) de la conformité du dispositif à la politique sur la base des mesures reçues des un ou plusieurs composants logiciels,
- la génération d'un événement de devis pour le dispositif sur la base de la vérification de la conformité du dispositif à la politique, et
- la provocation du stockage (140) de l'événement de devis dans un grand livre distribué (402),
**caractérisé en ce que** :
l'agent est un dispositif d'écoute d'événements (400) configuré pour détecter au moins des événements ajoutés dans le grand livre distribué indicatif d'un ou plusieurs parmi une définition de politique, une mise à jour de politique, un devis réussi, et un devis non réussi, et des actions de déclenchement basées sur des événements détectés.

2. Appareil selon la revendication 1, dans lequel les moyens sont en outre configurés pour réaliser :
- en réponse à la détection de la disponibilité d'une mise à jour pour le dispositif, le déclenchement (714) d'une mise à jour d'un système de correctifs (302) sur le dispositif, et
- la vérification de la conformité du dispositif à la politique sur la base d'un devis ultérieur, après la mise à jour sur le dispositif.

3. Appareil selon la revendication 1, dans lequel le dispositif d'écoute d'événements (400) est en outre configuré pour détecter des événements ajoutés dans le grand livre distribué indicatif d'un ou plusieurs parmi un démarrage de dispositif, un arrêt, un redémarrage de dispositif, une mise à jour de dispositif, une attestation de dispositif, une publication de correctif de mise à jour, et une révocation de correctif de mise à jour.

4. Appareil selon la revendication 1, dans lequel le dispositif d'écoute d'événements (400) est configuré pour
- examiner les événements ajoutés dans le grand livre distribué (402) après la dernière citation réussie en réponse à la non-conformité du dispositif à la politique, et
- détecter un besoin d'une mise à jour et/ou un correctif de mise à jour pour le dispositif sur la base de l'examen des événements.

5. Appareil selon l'une quelconque des revendications 1 à 4, dans lequel le grand livre distribué est un grand livre de chaîne de blocs.

6. Appareil selon l'une quelconque des revendications 1 à 4, dans lequel l'agent est configuré pour :
- envoyer une demande de devis au dispositif, et
- recevoir le devis dans une réponse de devis du dispositif.

7. Appareil selon l'une quelconque des revendications précédentes, dans lequel les moyens sont en outre configurés pour réaliser :
- la réception (606) d'une clé pour l'attestation, et
- la vérification (608) d'une signature dans le devis sur la base de la clé pour l'attestation.

8. Appareil selon l'une quelconque des revendications précédentes, dans lequel les moyens sont en outre configurés pour réaliser :
- la provocation du marquage (616) du dispositif comme n'étant pas de confiance en réponse à au moins l'un parmi un échec de la validation d'une signature reçue du dispositif, un échec de concordance d'une ou plusieurs valeurs des mesures reçues avec des valeurs associées dans la politique, et un conflit entre des informations supplémentaires dans la citation reçue et un état de dispositif stocké dans le grand livre distribué, et
- la provocation (708) d'une alerte à un administrateur système, ou
- le déclenchement (714) d'une mise à jour de logiciel d'un système de correctifs sur le dispositif en réponse à la détection de la non-conformité à la politique et à la disponibilité d'une mise à jour pour le dispositif.

9. Appareil selon l'une quelconque des revendications précédentes, dans lequel la politique et la demande de devis indiquent un ou plusieurs registres de configuration de plateforme, et
le devis comprend des mesures pour les registres de configuration de plateforme.

10. Système, comprenant l'appareil selon la revendication 1 et le dispositif (300), dans lequel le dispositif (300) comprend des moyens pour réaliser :
- la détection (210) d'un déclencheur pour des mesures d'état de logiciel,
- la réalisation (220) de mesures d'un ou plusieurs composants logiciels de l'appareil en réponse au déclencheur, et
- l'envoi (230) du devis à l'agent.

11. Procédé pour un agent d'un réseau d'attestation distribué, comprenant :
- la réception (110), par un composant d'attestation fourni par l'agent, d'une politique pour un dispositif (300), dans lequel la politique comprend un jeu d'informations indiquant des règles et/ou des valeurs pour attester un ou plusieurs composants logiciels,
- la réception (120) d'un devis du dispositif, le devis comprenant des mesures d'un ou plusieurs composants logiciels du dispositif,
- la vérification (130) de la conformité du dispositif à la politique sur la base des mesures reçues des un ou plusieurs composants logiciels,
- la génération d'un événement de devis pour le dispositif sur la base de la vérification de la conformité du dispositif à la politique, et
- la provocation du stockage (140) de l'événement de devis dans un grand livre distribué (402), dans lequel l'agent est un dispositif d'écoute d'événements configuré pour détecter au moins des événements ajoutés dans le grand livre distribué indicatif d'un ou plusieurs parmi une définition de politique, une mise à jour de politique, un devis réussi, et un devis non réussi, et des actions de déclenchement basées sur des événements détectés.

12. Procédé selon la revendication 11, comprenant en outre :
- en réponse à la détection de la disponibilité d'une mise à jour pour le dispositif, le déclenchement (714) d'une mise à jour d'un système de correctifs (302) sur le dispositif, et
- la vérification de la conformité du dispositif à la politique sur la base d'un devis ultérieur, après la mise à jour sur le dispositif.

13. Procédé selon la revendication 11 ou 12, comprenant en outre :
- l'examen des événements ajoutés dans le grand livre distribué (402) après la dernière citation réussie en réponse à la non-conformité du dispositif à la politique, et
- la détection d'un besoin d'une mise à jour et/ou d'un correctif de mise à jour pour le dispositif sur la base de l'examen des événements.

14. Procédé selon la revendication 11 à 13, comprenant en outre :
- la provocation du marquage (616) du dispositif comme n'étant pas de confiance en réponse à au moins l'un parmi un échec de la validation d'une signature reçue du dispositif, un échec de concordance d'une ou plusieurs valeurs des mesures reçues avec des valeurs associées dans la politique, et un conflit entre des informations supplémentaires dans la citation reçue et un état de dispositif stocké dans le grand livre distribué, et
- la provocation (708) d'une alerte à un administrateur système, ou
- le déclenchement (714) d'une mise à jour de logiciel d'un système de correctifs sur le dispositif en réponse à la détection de la non-conformité à la politique et à la disponibilité d'une mise à jour pour le dispositif.

15. Programme informatique, comprenant des instructions pour amener un appareil (100) à réaliser le procédé de l'une quelconque des revendications précédentes 11 à 14.
